Europäisches Patentamt

European Patent Office

Office européen des brevets

(11) Publication number: **0 340 973**
**A2**

## (12) EUROPEAN PATENT APPLICATION

(21) Application number: **89304249.9**

(22) Date of filing: **27.04.89**

(51) Int. Cl.⁴: **H02J 13/00**

(30) Priority: **05.05.88 GB 8810568**

(43) Date of publication of application:
**08.11.89 Bulletin 89/45**

(84) Designated Contracting States:
**BE DE ES FR GB**

(71) Applicant: **PLESSEY OVERSEAS LIMITED**
**Vicarage Lane**
**Ilford Essex IGl 4AQ(GB)**

(72) Inventor: **Beddoe, Stanley**
**6 Martin Avenue Stubbington**
**Fareham Hampshire(GB)**

(74) Representative: **Nicholson, Ronald**
**Intellectual Property Department The**
**Plessey Company plc 2-60 Vicarage Lane**
**Ilford Essex IG1 4AQ(GB)**

(54) **Improvements relating to electrical control systems.**

㊼ An electrical control system for operatively controlling and/or monitoring one or more remote power
switching terminals from a master power controller
terminal The power controller terminal and power
switching terminal(s) are linked by a data transmission line or bus coupled to the respective terminals
through D.C. isolating transformers and over which
coded data signals are transmitted The coded data
signals comprise coded bursts of relatively low frequency carrier signals at relatively low repetition
rates and produced by an oscillator circuit which
forms part of a tuned circuit at the terminal concerned which determines the carrier frequency and
which includes the coupling transformer coupling the
terminal to the data transmission line or bus.

# IMPROVEMENTS RELATING TO ELECTRICAL CONTROL SYSTEMS

This invention relates to electrical control systems and relates more specifically to electrical control systems for operatively controlling and/or monitoring from a master power controller terminal one or more remotely located electrical power switching/supply terminals by means of coded data signals transmitted over a serial data transmission line or bus. Each of the remote power switching/supply circuits may include its own local electrical power supply for supplying one or more electrical loads with electrical power in response to data control signals received over the data transmission line or bus.

These control systems may be used for controlling various switching terminals on ships or aircraft, for example, from a master power controller also located on the ship or aircraft, as the case may be.

The present invention is primarily directed to a relatively low cost electrical control system of the form described above in which the speed of transmission of the control data over the serial data transmission line or bus is not of paramount importance but in which good DC isolation of the data transmission line from the terminals and immunity to electro-magnetic interference and the generation of minimum external radiation by the system are achieved.

According to the present invention there is provided an electrical control system for operatively controlling and/or monitoring one or more remote power switching terminals from a master power controller terminal, in which the power controller terminal and power switching terminal(s) are linked by a data transmission line of bus coupled to the respective terminals through DC isolating transformers and over which coded data signals are transmitted and in which the coded data signals comprise binary coded bursts of relatively low frequency carrier signals of sinewave configuration at relatively low repetition rates and produced by an oscillator circuit which forms part of a tuned circuit at the terminal concerned which determines the carrier frequency and which includes the coupling transformer coupling the terminal to the data transmission line or bus.

In carrying out the invention the power switching terminal(s) and the power controller terminal may have tuned oscillators for producing data signals which are fed to the transmission line through the coupling transformers, the power controller terminal embodying means for producing command data signals for the selective operation of the power switching terminals and the latter terminals having means for producing terminal status signals of similar form to the command data signals for transmission to the power controller terminal. Both the power controller terminal and the power switching terminals may include signal decoders for the recognition of command and/or status signals.

The terminals may, for example, be remotely located on board a ship or aircraft or on land vehicles or they may be remotely located on land.

The data transmission line or bus may comprise a twisted pair of conductors in order to reduce interference (i.e. induced and/or generated) to a minimum.

By way of example the present invention will now be described with reference to the accompanying single-figure drawing which shows a block schematic/circuit diagram of an electrical control system for controlling respective power switching terminals from a master power controller terminal.

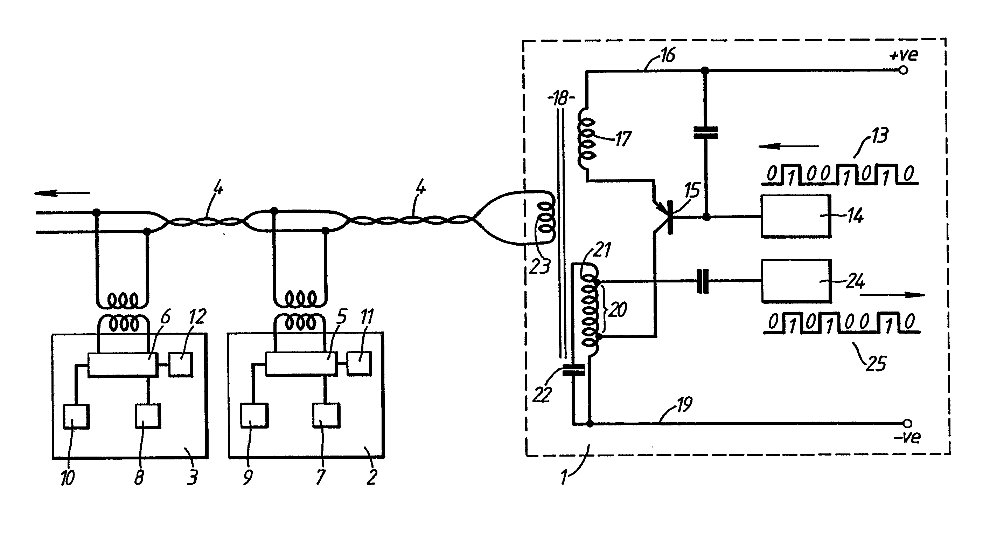

Referring to the drawing a master power controller terminal 1 is electrically coupled to remote power switching terminals 2 and 3 by means of a twisted conductor pair data transmission line or bus 4. The respective power switching terminals include switches 5 and 6 responsive to specific coded command data signals received from the master power controller terminal 1 over the data transmission line or bus 4 and isolating transformers 26 and 27. Responsive to the operation of the switches 5 and 6 local electrical power supplies 7 and 8, respectively, will be connected up to electrical loads 9 and 10 at the respective switching terminals. The status of the switching terminals 2 and 3 may be identified to the master power controller 1 by data signals returned from status signal generator means 11 and 12 at the power switching terminals 1 and 2 to the master power controller 1 over the data transmission line or bus 4.

For the purpose of producing control data signals (i.e. command signals) for transmission over the data bus 4 for the selective operation of switches at the power switching terminals, such as the switches 5 and 6, at the power switching terminals 2 and 3, binary coded square wave signals, such as the signal shown at 13, having a relatively low repetition frequency (e.g. between 20 and 100 KHz) between logic 1 and logic 0 signals in a logic 1/logic 0 repetitive signal pattern are produced by command signal generator 14 at the power controller terminal. The binary coded square wave signal such as the signal 13 is applied to the base of a transistor oscillator comprising a transistor 15 having its emitter connected to a positive potential line 16 through one primary winding 17 of a transformer 18 and having its collector connected to a negative potential line 19 through a tapped part 20 of a main primary winding 21 of the transformer 18.

In the present example the negative going edges of each of the logic 1 bits of the binary coded command signal such as the signal 13 cause the transistor 15 to be biased to its conducting condition so that the positive feedback signal produced through the primary winding 17 of the transformer 18 causes the transistor 15 to go into oscillation at a frequency which is determined by the tuning of the main primary winding 21 of the transformer 18 by a capacitor 22 connected across the winding 21. The frequency of the transformer tuning and the transistor oscillation may be chosen to lie between 100 to 500 KHz. Consequently, the binary coded command data signals produced in the secondary winding 23 of the tuned transformer 18 will comprise bursts of carrier frequency (i.e. 100 to 500 KHz) in response to logic 1 bits of the binary code data signal which will occur at the relatively low repetition frequency of between 20 to 100 KHz in the case of alternate logic 1 and logic 0 bit signals. The carrier frequency signals will be of sinewave form and will therefore not contain higher frequency harmonics which could give rise to the generation of radio frequency signals which could cause interference or result in the loss of security from unauthorised listening devices. As will be appreciated the binary coded command signals are coupled to the data transmission line or bus 4 by means of the transformer secondary winding 23 which is isolated as regards DC from the remainder of the power controller circuitry. Moreover, the ratio of the transformer windings will be arranged so that the characteristic impedance of the power controller terminal is matched to the transmission line or data bus impedance (e.g. within the range 50 to 100 ohms).

The binary coded command data signal transmitted over the twisted pair data transmission line 4 will cause the selective operation of the power on/off switch in one of the remote power switching terminals 2 or 3 in order to connect the electrical power supply at the terminal to the electrical load.

In response to the operation of the appropriate switch 5 or 6 at the power switching terminals the status signal generator 11 or 12, as the case may be, will produce a terminal status signal indicating that the electrical supply at the terminal has been connected to the electrical load. This status signal may also comprise a binary coded data signal of the same or similar form to that transmitted to it by the power controller terminal that is to say a data signal comprising bursts of carrier frequency (i.e. 100 to 500 KHz) separated by a period of 20 to 100 KHz or multiples thereof according to the logic 1 or logic 0 coding of the signal. This status signal will be transmitted back over the data transmission line or bus 4 to the power controller 1 whereupon a corresponding signal will be induced in the main primary winding of the transformer 18 and fed to a decoder 24 which produces a decoded binary signal of square wave configuration such as that shown at 25.

As will be appreciated from the foregoing the invention provides a relatively low speed data transmission arrangement for controlling the remote power switching terminals with the transmission arrangement including a resonant tuned circuit of restricted bandwidth which provides high signal-to-noise ratios as well as simplifying the circuitry and lowering the cost thereof and, moreover, resulting in better performance in various respects. Known electrical control systems on the other hand use wide frequency bandwidths and high data transmission speeds and are therefore complex and expensive or provide inadequate electro-magnetic compatibility in some applications leading to power switch malfunction because of interfering signals which are prevalent in electrical power systems of this kind.

## Claims

1. An electrical control system for operatively controlling and/or monitoring one or more remote power switching terminals from a master power controller terminal, in which the power controller terminal and power switching terminal(s) are linked by a data transmission line or bus coupled to the respective terminals through D.C. isolating transformers and over which coded data signals are transmitted and in which the coded data signals comprise coded bursts of relatively low frequency carrier signals at relatively low repetition rates and produced by an oscillator circuit which forms part of a tuned circuit at the terminal concerned which determines the carrier frequency and which includes the coupling transformer coupling the terminal to the data transmission line or bus.

2. An electrical control system as claimed in claim 1, in which the carrier signals are of sinewave configuration.

3. An electrical control system as claimed in claim 1 or claim 2, in which the power switching terminal(s) and the power controller terminal have tuned oscillators for producing data signals which are fed to the transmission line through the coupling transformers, the power controller terminal embodying means for producing terminal status signals of similar form to the command data signals for transmission to the power controller terminal.

4. An electrical control system as claimed in claim 1, claim 2 or claim 3, in which the power controller terminal and the power switching terminal(s) include signal decoders for the recognition of command and/or status signals.

5. An electrical control system as claimed in any preceding claim, in which the data transmission line or bus comprises a twisted pair of conductors.

6. An electrical control system substantially as hereinbefore described with reference to the accompanying drawing.